# EUROPEAN PATENT APPLICATION

(11) **EP 2 267 040 A1**
(43) Date of publication of application: **29.12.2010**
(21) Application number: 09731989.1
(22) Date of filing: 17.04.2009
(51) Int. Cl.: C08F 8/48

(54) **CYCLIZED ISOPRENE POLYMER, ALICYCLIC POLYMER AND OPTICAL RESIN**

(30) Priority: 18.04.2008 JP 2008109094; 02.09.2008 JP 2008225152; 30.01.2009 JP 2009020522
(71) Applicant: Zeon Corporation, Tokyo 100-8246 (JP); Riken, Wako-shi, Saitama 351-0198 (JP)
(72) Inventor: NISHII, Kei, Tokyo 100-8246 (JP); TSUNOGAE, Yasuo, Tokyo 100-8246 (JP); HOU, Zhaomin, Wako-shi Saitama 351-0198 (JP)
(74) Representative: Albrecht, Thomas
(86) International application number: PCT/JP2009/057795
(87) International publication number: WO 2009/128545

(57) **Abstract**

An isoprene-based polymer cyclized product obtained by cyclization of an isoprene-based polymer containing structural units expressed by the general formula (1) and having a ratio of content of the structural units to all repeating structural units of 60 mol% or more; an alicyclic polymer obtained by hydrogenation of 50% or more of the carbon-carbon double bonds of the isoprene-based polymer; and an optical resin comprising the isoprene-based polymer cyclized product and alicyclic polymer. 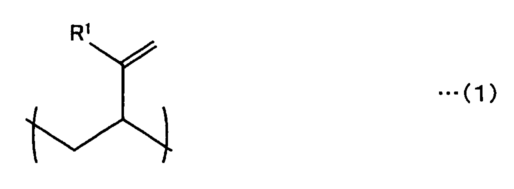 (in the general formula (1), R¹ indicates a C1 to C10 alkyl group)

## Description

### TECHNICAL FIELD

The present invention relates to a cyclized product of an isoprene-based polymer, an alicyclic polymer, and an optical resin, more particularly relates to an isoprene-based polymer cyclized product, alicyclic polymer, and optical resin high in mechanical strength and superior in heat resistance, transparency, and low birefringence.

### BACKGROUND ART

The method of causing a cyclization reaction of polyisoprene in the presence of an acid catalyst has been long known. By the cyclization reaction, a resin-like polymer having a cyclic structure with a glass transition temperature (Tg) of 30 to 60°C or so is obtained from a rubber-like polyisoprene. Here, the microstructure of polyisoprene includes, as bond types, mainly 1,4-bonds and 3,4-bonds. For such a cyclization reaction of polyisoprene, generally the industrially easily available polyisoprene comprised of 1,4-bonds (high-cis IR), polyisoprene comprised of 1,4-bonds and 3,4-bonds (lithium IR), etc. are used (for example, see Patent Document 1).

In the cyclized product obtained by causing such a cyclization reaction on polyisoprene, to obtain a cyclized product having a high glass transition temperature (Tg), the method of raising the cyclization degree when cyclizing the polyisoprene polymer may be considered. However, with just the method of raising the cyclization degree, while it is possible to make the Tg 100°C or more, the obtained cyclized product ends up becoming low in mechanical strength, so use for various types of shaped articles was not possible.

Further, it has been proposed to use a cyclized product obtained by causing a cyclization reaction on a polyisoprene or its hydrogenation product as an optical resin. For example, Patent Document 2 describes an optical material using polyisoprene having a cyclization rate of 80% or more or its hydrogenation product. However, in this Patent Document 2, as the polyisoprene, one having a low ratio of vinyl bond units in its microstructure (for example, less than 36%) is used, and this is cyclized and hydrogenated. Therefore, the obtained cyclized product has a glass transition temperature of a low 70 to 102°C or so. For use as an optical resin, the heat resistance was insufficient.

As opposed to this, in Patent Document 3, to improve the heat resistance, a cyclizedproduct of a copolymer of a polyisoprene and styrenes is proposed. However, in such a copolymer of a polyisoprene and styrenes, the ratio of the vinyl bond units in the polyisoprene units becomes a low one of less than 30%, so in Patent Document 3, to raise the glass transition temperature of the cyclized product, the ratio of the styrenes in the copolymer is set high. However, in this Patent Document 3, in the specific examples, despite the amount of styrene in the copolymer being made a high rate of 48 mol%, the obtained cyclized product has a glass transition temperature of about 110 to 114°C. For use as an optical resin, sufficient heat resistance still could not be obtained. In addition, if, like in Patent Document 3, the ratio of the styrenes in the copolymer rises, there is also the problem that the birefringence will end up deteriorating.

### PRIOR ART DOCUMENTS

### PATENT DOCUMENTS

Patent Document 1: Japanese Patent Publication (A) No. 2003-35971
Patent Document 2: Japanese Patent Publication (A) No. 64-1705
Patent Document 3: Japanese Patent Publication (A) No. 2007-269961

### DISCLOSURE OF THE INVENTION

### PROBLEM TO BE SOLVED BY THE INVENTION

The present invention was made in consideration of such a situation and has as its object the provision of an isoprene-based polymer cyclized product, alicyclic polymer, and optical resin high in mechanical strength and superior in heat resistance, transparency, and low birefringence.

### MEANS FOR SOLVING THE PROBLEMS

The inventors discovered that an isoprene-based polymer cyclized product obtained by cyclization of an isoprene-based polymer having a ratio of content of structural units of isoprene-based compounds bonded by 3,4-bonds with respect to all repeating structural units of a predetermined value or more is high in mechanical strength, has a high glass transition temperature, and is superior in heat resistance, transparency, and low birefringence. Further, the inventors discovered that an alicyclic polymer obtained by hydrogenating the carbon-carbon double bonds present in the isoprene-based polymer cyclized product also is high in mechanical strength, has a high glass transition temperature, and is superior in heat resistance, transparency, and low birefringence. The inventors completed the present invention based on these discoveries.

That is, according to the present invention, there is provided an isoprene-based polymer cyclized product obtained by cyclization of an isoprene-based polymer containing structural units expressed by the general formula (1) and having a ratio of content of the structural units to all repeating structural units of 60 mol% or more.

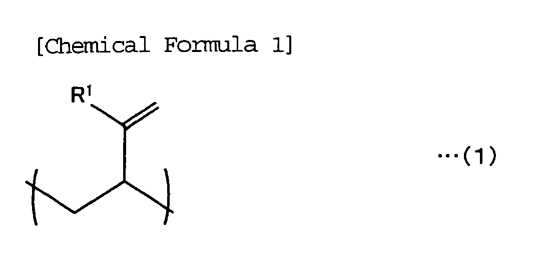

### (in the general formula (1), R¹ indicates a C1 to C10 alkyl group)

Preferably, in the general formula (1), R¹ is a methyl group.
Preferably, the structural units expressed by the general formula (1) have an isotacticity expressed by triads of 60%mm or more.
Preferably, the structural units expressed by the general formula (1) have an isotacticity expressed by pentads of 99%mmmm or more.
Preferably, a ratio of content of the structural units expressed by the general formula (1) in the isoprene-based polymer with respect to all repeating structural units is 95 mol% or more.
Preferably, the isoprene-based polymer has a number average molecular weight of 5,000 to 6,000,000.
Preferably, the isoprene-based polymer cyclized product has a number average molecular weight of 10,000 to 1,000,000.
Preferably, the isoprene-based polymer cyclized product has a cyclization rate of 60% or more.
Preferably, the isoprene-based polymer cyclized product has a glass transition temperature of 100°C or more.

According to the present invention, there is provided a method of production of the above isoprene-based polymer cyclized product, comprising a step of causing a cyclization reaction of the isoprene-based polymer containing the structural units expressed by the general formula (1) and having a ratio of content of the structural units to all repeating structural units of 60 mol% or more in the presence of an acidic compound.

Further, according to the present invention, there is provided an alicyclic polymer obtained by hydrogenation of 50% or more of the carbon-carbon double bonds of the isoprene-based polymer cyclized product. In the alicyclic polymer of the present invention, preferably the alicyclic polymer has a number average molecular weight of 10,000 to 1,000,000.

Furthermore, according to the present invention, there is provided an optical resin comprising the above isoprene-based polymer cyclized product or alicyclic polymer.

### EFFECTS OF THE INVENTION

According to the present invention, it is possible to provide an isoprene-based polymer cyclized product, alicyclic polymer, and optical resin high in mechanical strength, having a high glass transition temperature, and superior in heat resistance, transparency, and low birefringence.

### DESCRIPTION OF EMBODIMENTS

The isoprene-based polymer cyclized product of the present invention is a cyclized product obtained by cyclizing the later explained predetermined isoprene-based polymer.
First, the isoprene-based polymer used for producing the isoprene-based polymer cyclized product of the present invention will be explained.

### Isoprene-Based Polymer

The isoprene-based polymer used in the present invention is a polymer including structural units expressed by the following general formula (1) (that is, structural units of isoprene-based compounds bonded by 3,4-bonds) and having a ratio of content of structural units expressed by the following general formula (1) with respect to all repeating structural units of 60 mol% or more.

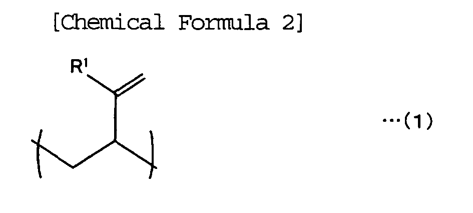

In the above general formula (1), R¹ is a C1 to C10 alkyl group, preferably a methyl group. If the number of carbon atoms of R¹ is larger than 10, the isoprene-based polymer cyclized product or alicyclic polymer obtained using the isoprene-based polymer falls in heat resistance.

Note that, as the microstructure of the isoprene-based polymer, there are also structural units other than the 3,4-bonds expressed by the above general formula (1). Specifically, in addition to the structural units expressed by the general formula (1), there may also be structural units expressed by the general formulas (2) to (4). Here, the isoprene-based polymer used in the present invention need only include the structural units expressed by the general formula (1) in the above ratio and may contain, in addition to the structural units expressed by the general formula (1), structural units expressed by the general formulas (2) to (4) or other structural units as well.

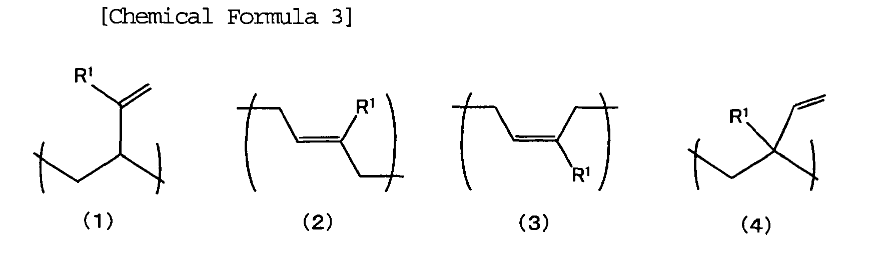

In the above general formulas (2) to (4), R¹ indicates the same as in general formula (1). Here, the above general formula (2) shows a structural unit of isoprene-based compounds bonded by 1,4-trans bonds, the above general formula (3) shows a structural unit of isoprene-based compounds bonded by 1,4-cis bonds, and the above general formula (4) shows a structural unit of isoprene-based compounds bonded by 1,2-bonds. Note that, the ratio of content of structural units expressed by the general formula (1) in an isoprene-based polymer may be calculated by measuring the NMR spectrum of the isoprene-based polymer, using the method described in, for example, the known literature (W. M. Dong, T. Masuda, J. Polym. Sci., Part A: Polym. Chem., 40, 1838 (2002), A. S. Khatchaturov, E. R. Dolinskaya, L. K. Prozenko, E. L. Abramenko and V. A. Kormer, Polymer, 18, 871, (1976)) as the basis to find the integrated value of the peaks attributable to the each structural unit, and comparing the same.

Further, the isoprene-based polymer used in the present invention has a ratio of content of the 3,4-bond units expressed by the above general formula (1) with respect to all repeating structural units forming the isoprene-based polymer of 60 mol% or more, preferably 70 mol% or more, more preferably 80 mol% or more, furthermore preferably 90 mol% or more, particularly preferably 95 mol% or more, and most preferably 99 mol% or more. By making the ratio of content of the 3,4-bond units the above range, the obtained isoprene-based polymer cyclized product and alicyclic polymer can be made ones high in mechanical strength, having high glass transition temperature, and superior in heat resistance.

The isoprene-based polymer used in the present invention may be polymers obtained by polymerizing just isoprene-based compounds able to form the structural units expressed by the above general formulas (1) to (4) and also copolymers of isoprene-based compounds and copolymerizable monomers. As such copolymerizable monomers, 1,3-butadiene, 1,3-pentadiene, 1,3-cyclohexadiene, and other conjugated dienes other than isoprene-based compounds; ethylene, propylene, and other α-olefins; styrene and other aromatic vinyl compounds; lactone, acrylic acid esters, methacrylic acid esters, and other polar monomers; etc. may be mentioned. However, to make the obtained isoprene-based polymer cyclized product and alicyclic polymer high in mechanical strength and superior in heat resistance, transparency, and low birefringence, the ratio of content of units of these copolymerizable monomers with respect to all monomer units forming the isoprene-based polymer is made preferably 30 mol% or less, more preferably 25 mol% or less, furthermore preferably 20 mol% or less, particularly preferably 10 mol% or less in range.

The molecular weight of the isoprene-based polymer used in the present invention is not particularly limited, but from the viewpoint of making the molecular weight of the isoprene-based polymer cyclized product after cyclization or alicyclic polymer after hydrogenation in the target range, the number average molecular weight (Mn) is preferably 5,000 to 6,000,000, more preferably 10,000 to 1,000,000, furthermore preferably 15,000 to 900,000, particularly preferably 20,000 to 800,000.

Further, as the isoprene-based polymer used in the present invention, one having an isotacticity of the structural units of the above general formula (1) within the following range is preferable. That is, the isotacticity of the structural units of the above general formula (1) is, expressed by triads, preferably 60%mm or more, more preferably 80%mm or more, still more preferably 90%mm or more, furthermore preferably 95%mm or more, particularly preferably 99%mm or more, and most preferably, expressed by pentads, 99%mmm or more.

Note that the isotacticity expressed by triads is the ratio (percentage) of "isotactic triads (mm)" to the "total of the isotactic triads (mm), heterotactic triads (mr), and syndiotactic triads (rr)" in three continuous structural units of the structural units of the above general formula (1), and expressed by "%mm". Further, similarly, the isotacticity expressed by pentads is the ratio (percentage) of "isotactic pentads (mmmm) " to the "total of the isotactic pentads (mmmm), heterotactic pentads (mmmr, mmrm, rmmr, mmrr, mrrm, rmrm, mrrr, rmrr), and syndiotactic pentads (rrrr)" in five continuous structural units of the structural units of the above general formula (1), and expressed by "%mmmm".

The isotacticity can be calculated by measuring the NMR spectrum of the isoprene-based polymer and, for expression by triads, finding the integrated values of the peaks based on the structures of the isotactic triads, heterotactic triads, and syndiotactic triads, and finding the ratio of the integrated value of the peak of the isotactic triads ("mm") to the total of these. The same is true for expression by pentads.

The isoprene-based polymer used in the present invention is produced by polymerizing the isoprene-based compound expressed by the following general formula (5), and the other monomer copolymerizable with the isoprene-based compound used in accordance with need, normally in the presence of a polymerization catalyst. 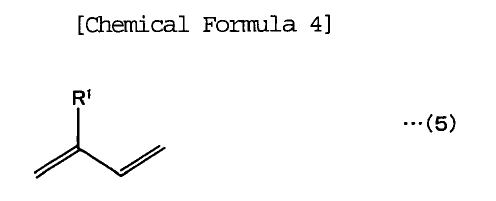 In the above general formula (5), R¹ indicates a C1 to C10 alkyl group, preferably a methyl group.

In particular, in the present invention, a polymerization catalyst which makes the isoprene-based compound polymerized by 3,4-bonds preferentially and results in the ratio of content of the 3,4-bond units of the obtained isoprene-based polymer with respect to all repeating structural units becoming 60 mol% or more is preferably selected. As such a polymerization catalyst, for example, a cobalt compound-based catalyst described in Japanese Patent Publication (A) No. 56-57809, an organolithium-based catalyst described in Japanese Patent Publication (A) No. 10-53670, a rare earth metal compound catalyst described in WO2005/08530 or Japanese Patent Publication (A) No. 2007-238857, a rare earth metal compound catalyst described in Organometallics, vol. 27, pp. 718-725 (2008) *or* Macramolecules, vol. 41, pp. 1983-1988 (2008); etc. may be mentioned. Among these, by using a rare earth metal catalyst expressed by the following general formula (6) or (7) disclosed in WO2005/085306 or Japanese Patent Publication (A) No. 2007-238857, it is possible to make the obtained isoprene-based polymer one with a high isotacticity of the structural units expressed by the above general formula (1) . 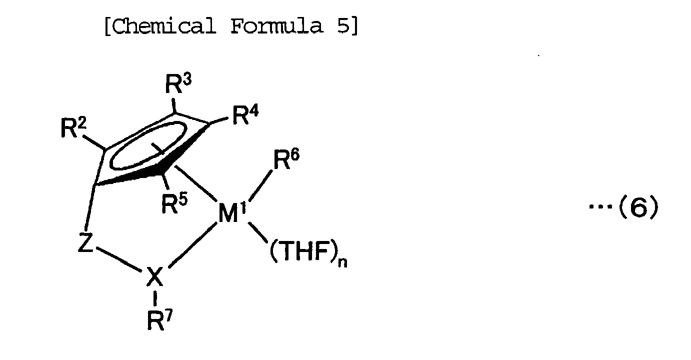 (in general formula (6), M¹ is a rare earth metal atom, R² to R⁵ are respectively independently a hydrogen atom or an alkyl group, R⁶ is an alkyl group, R⁷ is an aryl group or alkyl group, THF is a tetrahydrofuran ligand, X is N, P, or As, and Z is a dialkylsilylene group, dialkylgermanium cross-linked group, or ethylene group. Further, n is an integer of 0 to 2.) 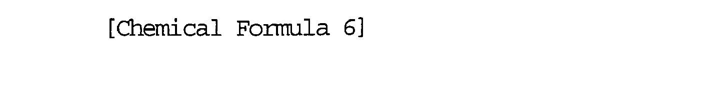 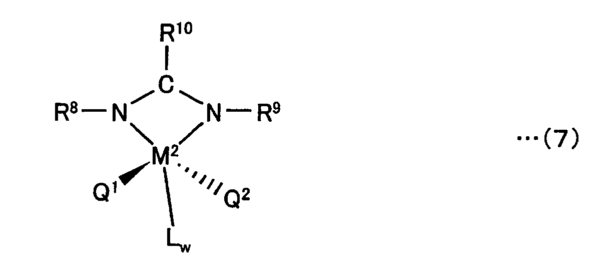 (in general formula (7) , R⁸ and R⁹ are respectively independently an alkyl group, cyclohexyl group, aryl group, or aralkyl group, R¹⁰ is an alkyl group, alkenyl group, alkynyl group, aryl group, or aralkyl group; aliphatic, aromatic, or cyclic amino group or phosphino group; boryl group, arylthio group; alkoxy group, or aryloxy group, M² is any rare earth element from lanthanum La to lutetium Lu excluding Sc, Y, and promethium Pm, Q¹ and Q² are respectively independently monoanionic ligands, and L is a neutral Lewis base group. Further, w is an integer of 0 to 3.)

At the time of production of the isoprene-based polymer used in the present invention, the amount of the polymerization catalyst used is, with respect to 1 mole of the monomer used for the polymerization, preferably 0.00001 to 0.05 mole, more preferably 0.0001 to 0.01 mole. If the amount of the polymerization catalyst used is too small, the polymerization reaction will sometimes not proceed sufficiently. On the other hand, if too large, the obtained isoprene-based polymer will sometimes become too low in molecular weight.

When producing the isoprene-based polymer, in addition to the polymerization catalyst, it is preferable to use a catalyst activator.
As the catalyst activator, an ionic compound, alkylalminum compound, Lewis acid, etc. may be mentioned. As an ionic compound, an ionic compound comprised of uncoordinated anions and cations is preferable. The amount of the catalyst activator used is preferably 0.5 to 5 moles with respect to 1 mole of the polymerization catalyst.

The method of polymerization for obtaining the isoprene-based polymer used in the present invention is not particularly limited, but the vapor phase polymerization method, solution polymerization method, slurry polymerization method, etc. may be mentioned. Among these, the solution polymerization method is preferable.

When using the solution polymerization method, the solvent used is not particularly limited so long as it is inert in the polymerization reaction and can dissolve the monomer or polymerization catalyst used for the polymerization, but a hydrocarbon-based solvent or a halogen-based solvent is preferably used. As the hydrocarbon-based solvent, for example, benzene, toluene, xylene, ethylbenzene, and other aromatic hydrocarbons; n-hexane, n-heptane, n-octane, and other aliphatic hydrocarbons; cyclohexane, cyclopentane, methylcyclohexane, and other alicyclic hydrocarbons; etc. may be mentioned. Further, as the halogen-based solvents, dichloromethane, chloroform, and other alkyl halogens; chlorobenzene, dichlorobenzene, and other aromatic halogens: etc. may be mentioned. Further, the polymerization reaction temperature when using the solution polymerization method for polymerization may be in a range of -100 to 100°C, for example, but it is not particularly limited. Further, the reaction time is preferably 1 minute to 24 hours, more preferably 5 minutes to 20 hours. Further, by performing the polymerization reaction under such conditions and adding a known polymerization anticatalyst to the polymerization system to stop the reaction after the polymerization conversion rate reaches a predetermined value, it is possible to produce the isoprene-based polymer.

Note that, when making the obtained isoprene-based polymer one with an isotacticity of the structural units expressed by the above general formula (1) in the above range, the temperature of the polymerization reaction is preferably made 25°C or less, more preferably 0°C or less, furthermore preferably -10°C or less.

Further, at the time of polymerization, it is also possible to add into the reaction system the monomer used for the polymerization, including the isoprene-based compound, polymerization catalyst, and catalyst activator, and, furthermore, other optional ingredients in any order for the polymerization, but usually, it is preferred that the monomer used for the polymerization and polymerization catalyst are added in first, then the catalyst activator used according to need is added for the polymerization.

### Isoprene-Based Polymer Cyclized Product

The isoprene-based polymer cyclized product of the present invention is a cyclized product obtained by cyclization of the above isoprene-based polymer.

The cyclization reaction is preferably one by the method of cyclization of the isoprene-based polymer in the presence of an acidic compound. Further, the cyclization reaction may be performed in an organic solvent or under solvent-free conditions.

As the acidic compound used in the cyclization reaction, one normally used for a cyclization reaction may be used. For example, a Lewis acid or Bronsted acid etc. may be mentioned. Specifically, hydrogen fluoride, hydrochloric acid, and other hydroacids; sulfuric acid, acetic acid, perchloric acid, trifluoroacetic acid, fluoromethane sulfonic acid, difluoromethane sulfonic acid, p-toluene sulfonic acid, and other oxo acids and their anhydrides or alkyl esters; phosphomolybdic acid, phosphotungstic acid, and other hetero polyacids; boron trifluoride, boron trichloride, stannous tetrachloride, titanium tetrachloride, aluminum chloride, diethyl aluminum monochloride, ethyl aluminum dichloride, aluminum bromide, antimony pentachloride, tungsten hexachloride, iron chloride, and other metal halides; silica, alumina, acid clay, zirconia tungstenate, zeolite, and other solid acids; triphenylborane, tris(4-fluorophenyl)borane, tris(3,5-difluorophenyl)borane, tris(4-fluoromethylphenyl)borane, tris(pentafluorophenyl)borane, and other borane compounds; trityl tetrakis(pentafluorophenyl)borate, N,N-dimethyl anilinium tetrakis (2,3,4,5-tetrafluorophenyl)borate, triethyl silylium tetrakis(pentafluorophenyl)borate, triphenyl silylium tetrakis(pentafluorophenyl)borate, and other borate compounds; etc. may be mentioned. These acidic compound may be used alone or may be used together in two or more types. Among these, from the viewpoint of being able to raise the cyclization rate, oxo acids or metal halides are preferable. Further, from the viewpoint of improving the solubility in a solvent or melt processability of the obtained cyclized product, an organic sulfonic acid compound is preferably used. In particular, p-toluene sulfonic acid is preferably used. Further, from the viewpoint of particularly improving the heat resistance of the obtained cyclized product, a metal halide, borane compound, or borate compound is preferably used.

The amount of the acidic compound used, with respect to 100 parts by weight of the isoprene-based polymer, is preferably 0.01 to 20 parts by weight, more preferably 0.05 to 15 parts by weight, furthermore preferably 0.1 to 10 parts by weight. If the amount of the acidic compound used is too small, the cyclization reaction is liable not to proceed sufficiently. On the other hand, if too large, cleavage reactions of molecular chains, oxidation reactions, and other side reactions are liable to occur.

When using an organic solvent for the cyclization reaction, the solvent is not particularly limited so long as one which does not inhibit the cyclization reaction, but a hydrocarbon-based solvent or a halogen-based solvent is preferably used. Further, when using an organic solvent for the cyclization reaction, it is possible to use the solvent used for the polymerization reaction at the time of production of the isoprene-based polymer as it is. In this case, it is sufficient to add an acidic compound to the polymerization reaction solution after polymerization so as to perform the cyclization reaction.

The amount of the organic solvent used in the cyclization reaction should be made one of a range causing the solids concentration of the isoprene-based polymer in the reaction system to become preferably 1 to 60 wt%, more preferably 2 to 40 wt%.

The cyclization reaction can be performed under any pressure of positive pressure, reduced pressure, or atmospheric pressure, but from the viewpoint of simplification of operation, performing it under atmospheric pressure is preferable. In particular, performing it under a dry atmosphere, in particular an atmosphere of dry nitrogen or dry argon, is preferable. By performing the cyclization reaction under such a dry atmosphere, it is possible to suppress side reactions due to moisture.

Further, the reaction temperature and reaction time in the cyclization reaction may be set in accordance with ordinary methods. The reaction temperature is preferably -100 to 200°C, more preferably -50 to 150°C, while the reaction time is preferably 1 minute to 100 hours, more preferably 10 minutes to 10 hours.

The isoprene-based polymer cyclized product of the present invention is produced in this way. Further, the isoprene-based polymer cyclized product produced in this way may be obtained as a solid in accordance with an ordinary method by deactivating the cyclization catalyst, removing the residual cyclization catalyst, and, further, when using an organic solvent, removing the organic solvent. Note that, when further treating this isoprene-based polymer cyclized product by a hydrogenation reaction to obtain an alicyclic polymer, it is also possible to perform the hydrogen reaction in the solution state without removing the organic solvent.

At the time of a cyclization reaction of an isoprene-based polymer, it is possible to judge if the cyclization reaction has proceeded by ¹H-NMR spectrum analysis. That is, in the ¹H-NMR spectrum of an isoprene-based polymer, the peaks due to H in the side chain alkenyl groups due to the vinyl bonds appearing near δ=4.0-5.5 ppm are to be reduced along with the progress of a cyclization reaction, so it is possible to judge the progress in the cyclization reaction by the reduction in the peaks due to H of the alkenyl groups.

The isoprene-based polymer cyclized product of the present invention has a cyclization rate of preferably 60% or more, more preferably 70% or more, furthermore preferably 80% or more. The higher the cyclization rate, the higher the glass transition temperature (Tg) of the isoprene-based polymer cyclized product and the better the heat resistance, so this is preferable. Note that, the upper limit of the cyclization rate is 100% but is not particularly limited. The cyclization rate of the isoprene-based polymer cyclized product may be calculated, for example, by using ¹H-NMR spectrum analysis to find the peak areas of protons derived from olefinic double bonds before and after the cyclization reaction of the isoprene-based polymer and comparing the peak areas before and after the cyclization reaction.

Here, in the past, a cyclized product obtained using as the isoprene-based polymer having repeating structural units of the 1,4-trans bond units and 1,4-cis bond units shown in the above general formulas (2) and (3) as main structural units and subjecting this to a cyclization reaction was known. Such a cyclized product is known to have a cyclic structure shown by the following general formula (8). 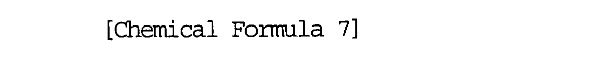 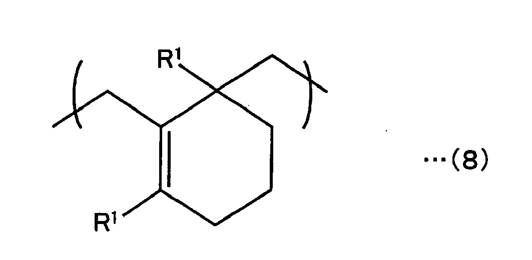 (in above general formula (8), R¹ is the same as in the above-mentioned general formula (1))

As opposed to this, the isoprene-based polymer cyclized product of the present invention is one obtained by using an isoprene-based polymer comprised mainly of repeating structural units of 3,4-bonds expressed by the above general formula (1) and subjecting this to a cyclization reaction, so has a cyclic structure expressed by the following general formula (9). 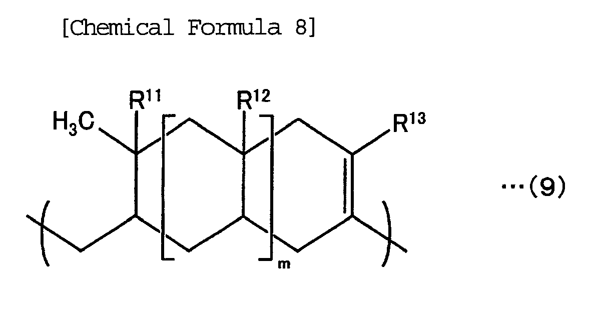 (in above general formula (9), R¹¹ to R¹³ respectively independently are a hydrogen atom or C1 to C10 alkyl group, and m is an integer of 0 or more.)

Note that, in the above general formula (9) , R¹¹ to R¹³ are respectively a hydrogen atom or C1 to C10 alkyl group, preferably a hydrogen atom or a methyl group.

The fact that the isoprene-based polymer cyclized product of the present invention has structural units expressed by the above general formula (9) can be confirmed, for example, by ¹³C-NMR spectral analysis. Specifically, in the ¹³C-NMR spectrum of the isoprene-based polymer cyclized product, the peaks derived from the C of the tetra-substituted olefin of the structural units expressed by the above general formula (9) near δ=120-130 ppm are observed. Due to this, it is possible to confirm that the isoprene-based polymer cyclized product has structural units expressed by the above general formula (9). Alternatively, this can be confirmed by the fact that in an ultraviolet absorption spectrum, almost no absorption of UV rays by the isoprene-based polymer is observed in the 250 to 260 nm wavelength region, while high UV ray absorption is exhibited by the isoprene-based polymer cyclized product.

Further, regarding the "m" in the above general formula (9), for example, when R¹¹ to R¹³ are methyl groups, it is possible to find the ratio of the structural units where m=0 and the ratio of structural units where m>0 from the ratio of the integrated value of the peak derived from C in tetra-substituted olefin near δ=120-130 ppm and the peak derived from C in the methyl group near δ=15-25 ppm in the ¹³C-NMR spectrum. Note that, the value of "m" may be m=0 or m>0. In both cases, the result is a cyclized product having cyclic structures superior in mechanical strength and heat resistance. Here, for example, when the structural units where m=0 are major, the cyclized product becomes a resin superior in solubility in a solvent and melt processability. Further, when the structural units where m>0 are major, it becomes a resin particularly superior in heat resistance. Further, it is possible to control the heat resistance of the cyclized product by the size of the value of "m".

The isoprene-based polymer cyclized product of the present invention has a number average molecular weight of 10,000 to 1,000,000, preferably 15,000 to 900,000, more preferably 20,000 to 800,000. If this molecular weight is too low, the isoprene-based polymer cyclized product falls in mechanical strength and shaping sometimes becomes difficult.

Furthermore, in the isoprene-based polymer cyclized product of the present invention, by nature, the higher the rate of progression of the cyclization reaction (that is, the higher the cyclization rate), the higher the glass transition temperature (Tg) becomes and, further, the higher the content of structural units where m>0 and, furthermore, the larger the value of "m" in the above general formula (9), the higher the glass transition temperature (Tg) becomes. Such an isoprene-based polymer cyclized product of the present invention has a Tg of preferably 100°C or more, more preferably 110°C or more, furthermore preferably 120°C or more. The higher the Tg, the better the heat resistance, so this is preferable. Note that, the upper limit of Tg is not particularly limited, may be a temperature above the heat decomposition temperature of the polymer cyclized product.

### Alicyclic Polymer

The alicyclic polymer of the present invention is obtained by hydrogenation of 50% or more of the carbon-carbon double bonds of the cyclized product obtained by cyclization of an isoprene-based polymer having a ratio of content of the above structural units to all repeating structural units of 60 mol% or more. The alicyclic polymer of the present invention can be obtained by hydrogenation of the carbon-carbon double bonds contained in an isoprene-based polymer cyclized product explained above.

The method of hydrogenation is not particularly limited. For example, a known method using Wilkinson's complex, cobalt acetate/triethyl aluminum, nickel acetyl acetonate/triisobutyl aluminum, or another homogeneous catalyst; activated charcoal, diatomaceous earth, magnesia, alumina, silica, alumina-magnesia, silica-magnesia, silica-alumina, synthetic zeolite, or other carriers on which nickel, palladium, platinum, or another catalyst metal is carried for forming a heterogeneous catalyst; etc. may be used.

The solvent able to be used for the hydrogenation is not particularly limited so long as it is an organic solvent which can dissolve the polymer and is inert to the hydrogenation catalyst. As such an organic solvent, for example, benzene, toluene, xylene, and other aromatic hydrocarbon-based solvents; pentane, hexane, heptane, octane, cyclopentane, cyclohexane, methyl cyclohexane, decalin, and other aliphatic hydrocarbon-based solvents; etc. may be mentioned. These may be used alone or may be used in combinations of two or more types.

The temperature of the hydrogenation reaction depends on the hydrogenation catalyst used or hydrogen pressure, but is preferably 20 to 280°C, more preferably 25 to 260°C, furthermore preferably 40 to 250°C. If the reaction temperature is too low, the reaction will sometimes have difficulty proceeding, while if the reaction temperature is too high, side reactions or a drop in molecular weight will sometimes easily occur. Further, the hydrogen pressure is preferably ordinary pressure to 50 MPa, more preferably 0.5 to 40 MPa. If the hydrogen pressure is too low, the hydrogenation reaction will sometimes have difficulty proceeding, while if the hydrogen pressure is too high, the restrictions on the apparatus will become greater, so this is not preferable.

The concentration of the alicyclic polymer before hydrogenation in the hydrogenation reaction system is preferably 2 to 40 wt%, more preferably 3 to 30 wt%, furthermore preferably 5 to 20 wt%. If the concentration of the alicyclic polymer before hydrogenation in the hydrogenation reaction system is too low, a drop in the productivity will easily be caused. On the other hand, if the concentration is too high, the hydrogenation product will sometimes precipitate, the reaction mixture will become higher in viscosity, and stirring will become difficult in some cases.

The reaction time of the hydrogenation reaction depends on the hydrogenation catalyst used, the hydrogen pressure and the reaction temperature, but is preferably 0.1 to 50 hours, more preferably 0.2 to 20 hours, furthermore preferably 0.5 to 10 hours.

The polymer after the hydrogenation reaction can be separated and obtained from the reaction mixture for example by reprecipitation, removal of the solvent under heating, removal of the solvent under reduced pressure, removal of the solvent by steam (steam stripping), and other usual operations performed when isolating a polymer from a solution.

When the hydrogenation reaction has proceeded or not can be judged by the reduction in the peak derived from the C of the tetra-substituted olefin appearing near δ=120-130ppm in the ¹³C-NMR spectrum before and after the hydrogenation reaction of the alicyclic polymer. Alternatively, it can also be confirmed from the disappearance of ultraviolet absorption peak near 250 to 260 nm in the ultraviolet absorption spectrum when hydrogenation progresses.

The alicyclic polymer of the present invention has a number average molecular weight of 10,000 to 1,000,000, preferably 15,000 to 900,000, more preferably 20,000 to 800,000. If this molecular weight is too low, the alicyclic polymer falls in mechanical strength and shaping sometimes becomes difficult.

### Optical Resin

The isoprene-based polymer cyclized product of the present invention and the alicyclic polymer of the present invention explained above are high in mechanical strength, have a high glass transition temperature (Tg), and are superior in heat resistance, transparency, and low birefringence. Specifically, they have a glass transition temperature (Tg) of 100°C or more, preferably 110°C or more, more preferably 120°C or more. Further, they have an absolute value of the stress-optical coefficient (C_{R}) of 1,000×10⁻¹² Pa⁻¹ or less, preferably 800×10⁻¹² Pa⁻¹ or less, more preferably 500×10⁻¹² Pa⁻¹ or less, that is, are superior in low birefringence. Therefore, these isoprene-based polymer cyclized product and alicyclic polymer may be suitably used for optical applications.

That is, the optical resin of the present invention is comprised of the above isoprene-based polymer cyclized product or alicyclic polymer.

The optical resin of the present invention is high in mechanical strength, has a high glass transition temperature (Tg), and is superior in heat resistance, transparency, and low birefringence. Therefore, it can be used for various applications.
Specifically, the optical resin of the present invention, for example, may be used for aspherical lenses, Frenel lenses, lenses for digital camera, lenses for video camera, lenses for projector, lenses for copier, lenses for mobile phone camera, pickup lenses for optical disk player, prisms, F·θ lenses, and other optical lenses; optical fibers, optical fiber connectors, optical fiber adhesives, and other optical fiber materials; substrates of compact disks, optomagnetic disks, digital disks, video disks, computer disks, and other optical recording media and optomagnetic recording medium; polarizing films for liquid crystal display, light guides for liquid crystal display of backlight or front light, light diffusers for liquid crystal display, glass substrate alternative films for liquid crystal display, retardation films, retardation plates for liquid crystal display, light guides for liquid crystal display of mobile phone, retardation plates for organoelectroluminescence display, color filters for liquid crystal display, antireflection films for flat panel display, touch panel boards, transparent conductive films, antireflection films, antiglare films, electronic paper boards, organic electroluminescence display boards, front protectors for plasma display, electromagnetic wave protectors for plasma display, front protectors for field emission display, and other sheets or films for display board; headlight lenses for automobile, headlight reflectors for automobile; front protectors for solar cell; light emitting diode sealants, UV light emitting diode sealants, white light emitting diode sealants, and other sealants; SAW filters, optical bandpass filters, second harmonic generators, Kerr effect generators, optical switches, optical interconnections, optical isolators, optical waveguides, and other optical device materials; planar light sources using organoelectroluminescence, planar light sources in which semiconductor particles are dispersed, fluorescent light sources in which fluorescent substances are dissolved or dispersed, and other light source materials; eyeglass lenses; etc.

Note that, the alicyclic polymer of the present invention not only is high in mechanical strength, has a high glass transition temperature (Tg), and is superior in heat resistance, transparency, and low birefringence, but also has a low water absorbability, electrical insulating characteristics, and various other characteristics, so can be used not only for optical resin applications, but also for electrical insulating parts, electrical and electronic components, electronic component sealants, medical devices, container materials, packaging materials, etc.

Further, when using the alicyclic polymer of the present invention for the above applications, it is possible to use the alicyclic polymer alone or possible to use it as a composition blended with a polyamide, polyurethane, polyester, polycarbonate, cyclic olefin resin, polyoxymethylene resin, acrylic resin, polyvinyl alcohol, ethylene-vinyl alcohol copolymer, polyolefin, polystyrene, styrene-based block copolymer, or other polymer. When used as a composition, a stabilizer, lubricant, pigment, impact resistance modifier, processing aid, reinforcing agent, coloring agent, flame retardant, weather resistance modifier, UV absorber, antioxidant, anti-mold agent, antibacterial agent, light stabilizer, anti-static agent, silicone oil, antiblocking agent, mold release agent, foam agent, fragrance, or other various types of additives; glass fibers, polyester fibers, and other various fibers; talc, mica, montmorillonite, smectite, silica, wood chips, and other fillers; various types of coupling agents and other ingredients may be blended according to need.

### EXAMPLES

Below, the present invention will be explained further based on detailed examples, but the present invention is not limited to these examples. Note that, below, "parts" are based on weight unless otherwise indicated. Further, the tests and evaluations were conducted as follows:

### Weight Average Molecular Weight (Mw) and Number Average Molecular Weight (Mn)

Gel permeation chromatography (GPC) using tetrahydrofuran as a solvent was used to measure the isoprene-based polymer (polyisoprene), isoprene-based polymer cyclized product (cyclized product of polyisoprene), and alicyclic polymer (hydrogenation product of cyclized product of polyisoprene) for their number average molecular weight (Mn), weight average molecular weight (Mw), and molecular weight distribution (Mw/Mn) converted to polystyrene values.

### Ratio of Content of 3,4-Bond Units

The isoprene-based polymer was measured for its ¹H-NMR spectrum, the integrated value of the peaks attributable to the structural units was found from the obtained spectrum, and ratio of content of the repeating structural units (3,4-bond units) expressed by the above general formula (1) was calculated from the integrated value of the peaks based on the 3,4-bond units and the integrated values of the peaks based on other bond units.

### Cyclization Rate

¹H-NMR spectrum analysis was used to measure the peak areas of protons derived from double bonds before and after the cyclization reaction of the isoprene-based polymer. Further, the peak areas of the protons derived from the double bonds before and after the cyclization reaction were used to find the ratio of the amount of protons derived from double bonds remaining in the cyclized product after the cyclization reaction in the case of deeming the amount of protons derived from double bonds before the cyclization reaction as 100 and the cyclization rate was calculated in accordance with the "cyclization rate(%)=(100 - "ratio of the amount of protons derived from double bonds remaining in cyclized product after cyclization reaction")".

### Glass Transition Temperature (Tg)

The isoprene-based polymer, isoprene-based polymer cyclized product, and alicyclic polymer were measured for their glass transition temperatures using a differential scan calorimeter (DSC) (made by Bruker AXS K.K., TAPS3000S) under conditions of a temperature rising rate of 10°C/min.

### Mechanical Strength

A 1% chloroform solution of the isoprene-based polymer cyclized product and alicyclic polymer was cast on a glass plate and dried to prepare a cast film. The mechanical strength was judged by whether cracks formed in the obtained cast film.

### Isotacticity

The isoprene-based polymer was measured for isotacticity by the following method. That is, the isoprene-based polymer was measured for its ¹³C-NMR spectrum, the obtained spectrum was used to identify the peaks attributable to the isotactic triads (mm), heterotactic triads (mr), and syndiotactic triads (rr), and the ratio of the integrated value of the peaks of the isotactic triads (mm) to the total of the integrated values of these peaks was found so as to find the isotacticity expressed by triads (unit: %mm). Further, in the same way, the isotacticity expressed by pentads (unit: %mmmm) was also found.

### Hydrogenation Rate

¹³C-NMR spectrum analysis was used to find the peak areas derived from C of the tetra-substituted olefin appearing near δ=120-130 ppm before and after the hydrogenation reaction of the isoprene-based polymer cyclized product. The hydrogenation rate of the hydrogenation product of the alicyclic polymer was calculated from the area ratio.

### Stress Optical Coefficient (C_{R})

The isoprene-based polymer cyclized product and alicyclic polymer were measured for the stress optical coefficient (C_{R}) by the method described in Polymer Journal, Vol. 27, No. 9, pp. 943-950 (1995). That is, first, the isoprene-based polymer cyclized product and the alicyclic polymer were respectively hot pressed to prepare samples of a thickness of 0.5 mm, vertical size of 20 mm, and horizontal size of 10 mm, then the samples were stretched under an atmosphere of the glass transition temperature (Tg) or more by several percent by several types of constant loads, and in that state were slowly cooled to return them to room temperature, then measured for resultant phase differences. The resultant phase differences and applied stress were used to calculate the stress optical coefficient (C_{R}).

### Synthesis Example 1

Under a nitrogen atmosphere, a glass reaction vessel in which a magnetic stirrer was placed was charged with 20 ml of a chlorobenzene solution of 0.10 mmol of the yttrium benzamidinate complex expressed by the following formula (10) and 5.11 g (75 mmol) of isoprene and was cooled to -10°C. Note that the yttrium benzamidinate complex expressed by the following formula (10) was synthesized by the method described in Japanese Patent Publication (A) No. 2007-238857. 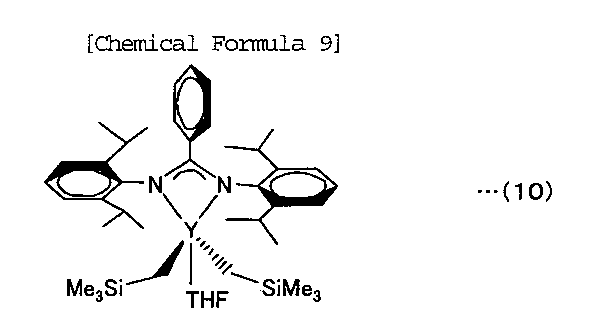 Next, 10 ml of a chlorobenzene solution containing, as a polymerization activation agent, 0.10 mol of [Ph₃C] [B(C₆F₅)₄] was added. The mixture was stirred and polymerized at -10°C for 20 minutes. After this, a small amount of methanol was added to the reaction system to stop the polymerization, then the reaction solution was poured into a large excess of methanol containing a small amount of hydrochloric acid and 2,6-di-t-butyl-p-cresol (BHT). Further, the precipitated polymer was recovered, was washed by methanol, then was vacuum dried at 40°C for 3 days to thereby obtain 5.1 g of polyisoprene (A).

The obtained polyisoprene (A) had an Mn=670,700 and Mw/Mn=1.42, had a ratio of content of 3,4-bond units (structural units expressed by the above general formula (1)) of 99 mol% or more, and had an isotacticity of the structural units expressed by the above general formula (1) expressed by triads of 99%mm or more and expressed by pentads of 90%mmmm.

### Synthesis Example 2

Except for using, instead of a yttrium benzamidinate complex, a scandium benzamidinate complex expressed by the following formula (11) , the same procedure was followed as in Synthesis Example 1 to obtain 5.1 g of polyisoprene (B). The scandium benzamidinate complex expressed by the following formula (11) was synthesized in accordance with the method described in Japanese Patent Publication (A) No. 2007-238857.

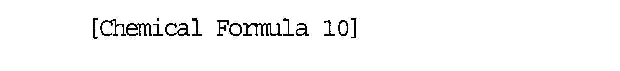

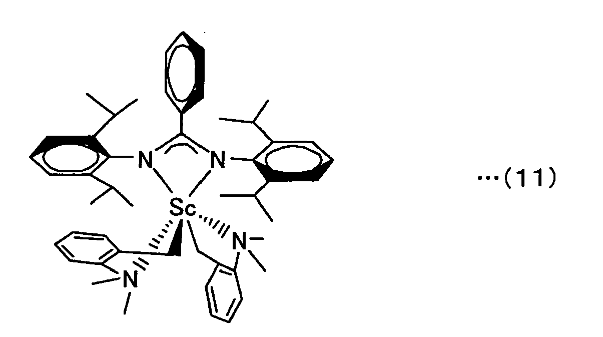

The obtained polyisoprene (B) had an Mn=204,600 and Mw/Mn=2.21, had a ratio of content of 3,4-bond units (structural units expressed by the above general formula (1)) of 99.5 mol% or more, and had an isotacticity of the structural units expressed by the above general formula (1) expressed by triads of 100%mm and expressed by pentads of 99%mmmm.

### Synthesis Example 3

Except for using toluene instead of chlorobenzene and changing the polymerization temperature from -10°C to 25°C, the same procedure was followed as in Synthesis Example 2 to obtain 5.0 g of polyisoprene (C). The obtained polyisoprene (C) had an Mn=132,500 and Mw/Mn=3.82, and had a ratio of content of 3,4-bond units (structural units expressed by the above general formula (1)) of 80 mol%. No regularity was observed in the tacticity of the 3,4-bond units.

### Synthesis Example 4

Except for changing the polymerization temperature from 25°C to - 20°C, the same procedure was followed as in Synthesis Example 3 to obtain 4.8 g of polyisoprene (D). The obtained polyisoprene (D) had an Mn=136, 800 and Mw/Mn=2.17, had a ratio of content of 3,4-bond units (structural units expressed by the above general formula (1)) of 97 mol%, and had an isotacticity of the structural units expressed by the above general formula (1) expressed by triads of 39%mm.

### Synthesis Example 5

Under a nitrogen atmosphere, a glass reaction vessel in which a magnetic stirrer was placed was charged with 30 ml of toluene and 0.089 mmol of n-butyl lithium (1.56M hexane solution), then was heated to 60°C. Next, 5.11 g (75 mmol) of isoprene was added, then the system was stirred while polymerizing it at 60°C for 60 minutes. After this, a small amount of methanol was added to the reaction system to stop the polymerization, then the reaction solution was poured into a large excess of methanol containing a small amount of hydrochloric acid and BHT. Further, the precipitated polymer was recovered, was washed by methanol, then was vacuum dried at 40°C for 3 days to thereby obtain 5.1 g of polyisoprene (E).

The obtained polyisoprene (E) had an Mn=107,000 and Mw/Mn=1.15. The microstructure included 73 mol% of cis 1,4-bond units (structural units expressed by the above general formula (3)), 22 mol% of trans 1,4-bond units (structural units expressed by the above general formula (2)), and 5 mol% of 3,4-bond units (structural units of the above general formula (1)). No regularity was observed in the tacticity of the 3,4-bond units.

### Synthesis Example 6

Under a nitrogen atmosphere, a glass reaction vessel in which a magnetic stirrer was placed was charged with 12.0 parts of isoprene and 45 parts of cyclohexane. Next, the glass reaction vessel was charged with 1.6 parts of a mixed solution of 0.033 part of N,N,N',N'-tetramethylethylene diamine (TMEDA) and 0.42 part of sodium-t-amylate (STA) dissolved in 15 parts of cyclohexane. Further, 1.2 parts of a 0.0825 mol/l n-butyl lithium (nBuLi)/cyclohexane solution was added and the system polymerized at 30°C for 1 hour. After that, a small amount of methanol was added to the reaction system to stop the polymerization, then the reaction solution was poured into a large excess of isopropanol containing a small amount of hydrochloric acid and 2,6-di-t-butyl-p-cresol (BHT). Further, the precipitated polymer was recovered, was washed by isopropanol, then was vacuum dried at 40°C for 3 days to thereby obtain 10.5 parts of polyisoprene (F). The obtained polyisoprene (F) had an Mn=253,300 and Mw/Mn=1.84, and had a ratio of content of 3,4-bond units (structural units expressed by the above general formula (1)) of 78 mol%. Further, it had a glass transition temperature (Tg) of 18°C.

### Synthesis Example 7

Except for using, instead of the 0.033 part of N,N,N',N'-tetramethylethylene diamine, 0.056 part of N,N'-1,2-dipiperidyl ethane (DPE), the same procedure was followed as in Synthesis Example 6 to obtain 10.1 parts of polyisoprene (G). The obtained polyisoprene (G) had an Mn=243,100 and Mw/Mn=2.07, and had a ratio of content of 3,4-bond units (structural units expressed by the above general formula (1)) of 89 mol%. Further, it had a glass transition temperature (Tg) of 28°C.

### Synthesis Example 8

Under a nitrogen atmosphere, a glass reaction vessel in which a magnetic stirrer was placed was charged with 20 parts of a toluene solution of 0.027 part of the scandium benzamidinate complex expressed by the above formula (11) and 6.7 parts of isoprene. Next, 10 parts of a toluene solution containing, as a polymerization activation agent, 0.037 part of [Ph₃C] [B(C₆F₅)₄] was added. The mixture was stirred and polymerized at 25°C for 5 minutes. After that, a small amount of methanol was added to the reaction system to stop the polymerization, then the reaction solution was poured into a large excess of methanol containing a small amount of hydrochloric acid and 2,6-di-t-butyl-p-cresol (BHT). Further, the precipitated polymer was recovered, was washed by methanol, then was vacuum dried at 40°C for 3 days to thereby obtain 6.5 parts of polyisoprene (H). The obtained polyisoprene (H) had an Mn=132,500 and Mw/Mn=3.82, and had a ratio of content of 3,4-bond units (structural units expressed by the above general formula (1)) of 83 mol%. Further, it had a glass transition temperature (Tg) of 23°C.

### Synthesis Example 9

Except for making the polymerization temperature -40°C, the same procedure was followed as in Synthesis Example 7 to obtain 5.5 parts of polyisoprene (I). The obtained polyisoprene (I) had an Mn=136,800 and Mw/Mn=2.17, and had a ratio of content of 3,4-bond units (structural units expressed by the above general formula (1)) of 97 mol%. Further, the glass transition temperature (Tg) was 31°C.

### Example 1

glass reactor in which a magnetic stirrer was placed was charged with 1.0 g of the polyisoprene (A) obtained at Synthesis Example 1, 36 mg of p-toluene sulfonic acid, and 10 ml of toluene, and the inside of the reactor was replaced with nitrogen. Next, the reaction system was stirred while heating it to 80°C and reacted at 80°C for 4 hours. After that, a 25% sodium carbonate aqueous solution was added to stop the reaction, then a glass filter was used to remove the residual catalyst. The filtrate was poured into a large excess of methanol containing 2,6-di-t-butyl-p-cresol (BHT). Further, the precipitated polymer was recovered, was washed by methanol, then was vacuum dried at 40°C for 3 days to obtain 0.86 g of polyisoprene cyclized product.

The obtained polyisoprene cyclized product had an Mn=77,200 and Mw/Mn=1.81, had a cyclization rate of 92%, had a value of "m" in the general formula (9) of a ratio of m=0 of 86 mol% and a ratio of m>0 of 14 mol%, and had a Tg=132°C.
Further, the obtained polyisoprene cyclized product was used to produce a cast film. The obtained cast film was pliable and did not crack even when bent.

### Example 2

Except for using, instead of the polyisoprene (A) obtained at Synthesis Example 1, the polyisoprene (B) obtained at Synthesis Example 2, the same procedure was followed as in Example 1 to obtain 0.74 g of polyisoprene cyclized product and similarly evaluate it.

The obtained polyisoprene cyclized product had an Mn=57,200 and Mw/Mn=1.94, had a cyclization rate of 940, and had a Tg=132°C.
Further, the obtained polyisoprene cyclized product was used to produce a cast film. The obtained cast film was pliable and did not crack even when bent.

### Example 3

A glass reactor in which a magnetic stirrer was placed was charged with 1.0 g of the polyisoprene (A) obtained at Synthesis Example 1 and 8 ml of chloroform, and the inside of the reactor was replaced with nitrogen. Next, a mixed solution of 10 mg of trityl tetrakis(pentafluorophenyl) borate and 2 ml of chloroform was added, then the reaction system was stirred while reacting it at room temperature for 4 hours. After that, a 25% sodium carbonate aqueous solution was added to stop the reaction, then a glass filter was used to remove the residual catalyst. The filtrate was poured into a large excess of methanol containing BHT. Further, the precipitated polymer was recovered, was washed by methanol, then was vacuum dried at 40°C for 3 days to obtain 0.95 g of polyisoprene cyclized product.

The obtained polyisoprene cyclized product had an Mn=133,100 and Mw/Mn=2.53, had a cyclization rate of 91%, and had a Tg=152°C.
Further, the obtained polyisoprene cyclized product was used to produce a cast film. The obtained cast film was pliable and did not crack even when bent.

### Example 4

Except for using, instead of the polyisoprene (A) obtained at Synthesis Example 1, the polyisoprene (C) obtained at Synthesis Example 3, the same procedure was followed as in Example 1 to obtain 0.82 g of polyisoprene cyclized product and similarly evaluate it.

The obtained polyisoprene cyclized product had an Mn=92,600 and Mw/Mn=1.72, had a cyclization rate of 97%, and had a Tg=120°C.
Further, the obtained polyisoprene cyclized product was used to produce a cast film. The obtained cast film was pliable and did not crack even when bent.

### Example 5

A glass reactor in which a magnetic stirrer was placed was charged with 1.0 g of the polyisoprene (D) obtained at Synthesis Example 4 and 8 ml of toluene, and the inside of the reactor was replaced with nitrogen. Next, a mixed solution of 10 mg of tris(pentafluorophenyl) borane and 2 ml of toluene was added, then the reaction system was stirred while reacting it at room temperature for 4 hours. After that, a 25% sodium carbonate aqueous solution was added to stop the reaction, then a glass filter was used to remove the residual catalyst. The filtrate was poured into a large excess of methanol containing BHT. Further, the precipitated polymer was recovered, was washed by methanol, then was vacuum dried at 40°C for 3 days to obtain 0.90 g of polyisoprene cyclized product.

The obtained polyisoprene cyclized product had an Mn=85,600 and Mw/Mn=1.56, had a cyclization rate of 97%, and had a Tg=168°C.
Further, the obtained polyisoprene cyclized product was used to produce a cast film. The obtained cast film was pliable and did not crack even when bent.

### Comparative Example 1

Except for using, instead of the polyisoprene (A) obtained in Synthesis Example 1, the polyisoprene (E) obtained in Synthesis Example 5, the same procedure was followed as in Example 1 to obtain 0.95 g of polyisoprene cyclized product and similarly evaluate it.

The obtained polyisoprene cyclized product had an Mn=80,200 and Mw/Mn=1.31, had a cyclization rate of 76%, and had a Tg=48°C.
Note that, the obtained polyisoprene cyclized product was used to produce a cast film. The obtained cast film was pliable and did not crack even when bent.

### Comparative Example 2

Except for changing the amount of addition of p-toluene sulfonic acid from 36 mg to 90 mg and changing the cyclization reaction conditions from 80°C, 4 hours to 85°C, 8 hours, the same procedure was followed as in Comparative Example 1 to obtain 0.92 g of polyisoprene cyclized product and similarly evaluate it.

The obtained polyisoprene cyclized product had an Mn=48,500 and Mw/Mn=1.45, had a cyclization rate of 89%, and had a Tg=105°C. Further, the obtained polyisoprene cyclized product was used to try to produce a cast film. During the drying off of the solvent, the film ended up formed with innumerable cracks and therefore production of a cast film was not possible.

**[Table 1]**

| | Example | | | | | Comparative Example | |
|---|---|---|---|---|---|---|---|
| | 1 | 2 | 3 | 4 | 5 | 1 | 2 |
| Polyisoprene | | | | | | | |
| Number average molecular weight (Mn) | 670,700 | 204,600 | 670,700 | 132,500 | 136,800 | 107,000 | 107,000 |
| Molecular weight distribution (Mw/Mn) | 1.42 | 2.21 | 1.42 | 3.82 | 2.17 | 1.15 | 1.15 |
| Ratio of 3,4-bond units (mol%) | ≥99 | ≥99.5 | ≥99 | 80 | 97 | 5 | 5 |
| Isotacticity (%/mm) | ≥99 | 100 | ≥99 | - | 39 | - | - |
| (%/mmmm) | 90 | 99 | 90 | - | - | - | - |
| Cyclization reaction conditions | | | | | | | |
| Cyclization catalyst * | p-toluene sulfonic acid | p-toluene sulfonic acid sulfonic acid | Trityl tetrakis (pentafluorophenyl) borate | p-toluenep-toluene sulfonic acid | Tris (pentafluoro-(pentafluorophenyl) borane | p-toluenep-toluene sulfonic acid sulfonic acid | p-toluene, sulfonic acid |
| Cyclization temperature (°C) | 80 | 80 | Room temp. | 80 | Room temp. | 80 | 85 |
| Cyclization time (h) | 4 | 4 | 4 | 4 | 4 | 4 | 8 |
| Polyisoprene cyclized product | | | | | | | |
| Number average molecular weight (Mn) | 77,200 | 57,200 | 133,100 | 92,600 | 85,600 | 80,200 | 48,500 |
| Molecular weight distribution (Mw/Mn) | 1.81 | 1.94 | 2.53 | 1.72 | 1.56 | 1.31 | 1.45 |
| Cyclization rate (%) | 92 | 94 | 91 | 97 | 97 | 76 | 89 |
| Glass transition temperature (Tg) (°C) | 132 | 132 | 152 | 120 | 168 | 48 | 105 |
| Mechanical strength * * | Good | Good | Good | Good | Good | Good | Poor |

| | | | | | | | |
|---|---|---|---|---|---|---|---|
| * The amount of use of the p-toluene sulfonic acid in Examples 1 and 2 and Comparative Example 1 was 36 mg and in Comparative Example 2 was 90 mg. ** One with pliable and no cracks was indicated as "good", while one with cracks was indicated as "Poor". | | | | | | | |

### Example 6

glass reactor in which a magnetic stirrer was placed was charged with 10 parts of the polyisoprene (F) obtained at Synthesis Example 6, 0.36 part of p-toluene sulfonic acid, and 86 parts of toluene, and the inside of the reactor was replaced with nitrogen. Next, the reaction system was stirred while heating it to 80°C to cause it to react at 80°C for 4 hours. After that, a 25% sodium carbonate aqueous solution was added to stop the reaction, then a glass filter was used to remove the residual catalyst. The filtrate was poured into a large excess of methanol containing 2,6-di-t-butyl-p-cresol (BHT). Further, the precipitated polymer was recovered, was washed by methanol, then was vacuum dried at 40°C for 3 days to obtain 9.6 parts of polyisoprene cyclized product. The obtained polyisoprene cyclized product (isoprene-based polymer cyclized product) had an Mn=135,400 and Mw/Mn=1.90, and had a cyclization rate of 96%. Further, it had a glass transition temperature (Tg) of 102°C, and had a stress optical coefficient (C_{R}) of less than the absolute value of the measurement limit ±100×10⁻¹²Pa⁻¹.

Next, an autoclave equipped with a stirrer was charged with 6 parts of the polyisoprene cyclized product obtained above, 1.3 parts of 10% Pd/carbon (moisture content 45%), and 114 parts of cyclohexane, and the inside of the autoclave was replaced with nitrogen. Next, hydrogen was introduced and a hydrogenation reaction was performed at a hydrogen pressure of 1.0 MPa at 160°C for 20 hours. Next, the reaction solution was filtered to remove the 10% Pd/carbon, then the result was poured into a large excess of isopropanol. Next, the precipitated polymer was recovered, was washed by isopropanol, then was vacuum dried at 80°C for 3 days to thereby obtain 5.5 parts of a hydrogenation product of polyisoprene cyclized product (alicyclic polymer). The obtained hydrogenation product of polyisoprene cyclized product had an Mn=110,900 and Mw/Mn=1.80, and had a hydrogenation rate of 98%. Further, it had a glass transition temperature (Tg) of 117°C and a stress optical coefficient (C_{R}) of 541×10⁻¹²Pa⁻¹.
Further, the obtained polyisoprene cyclized product and its hydrogenation product were used to prepare cast films. The obtained cast films were pliable and did not crack even when bent.

### Example 7

Except for using, instead of the polyisoprene (F) obtained in Synthesis Example 6, the polyisoprene (G) obtained in Synthesis Example 7, the same procedure was followed as in Example 6 to perform a cyclization reaction and hydrogenation reaction and obtain a polyisoprene cyclized product (isoprene-based polymer cyclized product) and hydrogenation product of polyisoprene cyclized product (alicyclic polymer). The obtained polyisoprene cyclized product had an Mn=134,800 and Mw/Mn=1.56, had a cyclization rate of 97%, had a glass transition temperature (Tg) of 121°C, and had a stress optical coefficient (C_{R}) of the absolute value of the measurement limit ±100×10⁻¹² Pa⁻¹ or less. Further, the obtained hydrogenation product of polyisoprene cyclized product had an Mn=95,500 and Mw/Mn=1.51, had a hydrogenation rate of 99% or more, had a glass transition temperature (Tg) of 141°C, and had a stress optical coefficient (C_{R}) of 210×10⁻¹² Pa⁻¹.
Further, the obtained polyisoprene cyclized product and its hydrogenation product were used to prepare cast films. The obtained cast films were pliable and did not crack even when bent.

### Example 8

Except for using, instead of the polyisoprene (F) obtained in Synthesis Example 6, the polyisoprene (H) obtained in Synthesis Example 8, the same procedure was followed as in Example 6 to perform a cyclization reaction and hydrogenation reaction and obtain a polyisoprene cyclized product (isoprene-based polymer cyclized product) and hydrogenation product of polyisoprene cyclized product (alicyclic polymer). The obtained polyisoprene cyclized product had an Mn=92,600 and Mw/Mn=1.72_{,} had a cyclization rate of 95%, had a glass transition temperature (Tg) of 120°C, and had a stress optical coefficient (C_{R}) of less than the absolute value of the measurement limit ±100×10⁻¹² Pa⁻¹. Further, the hydrogenation product of polyisoprene cyclized product had an Mn=91,700 and Mw/Mn=1.51, had a hydrogenation rate of 98%, had a glass transition temperature (Tg) of 138°C, and had a stress optical coefficient (C_{R}) of 378×10⁻¹² Pa⁻¹.
Further, the obtained polyisoprene cyclized product and its hydrogenation product were used to prepare cast films. The obtained cast films were pliable and did not crack even when bent.

### Example 9

Except for using, instead of the polyisoprene (F) obtained at Synthesis Example 6, the polyisoprene (I) obtained at Synthesis Example 9, the same procedure was followed as in Example 6 to perform a cyclization reaction and hydrogenation reaction and obtain a polyisoprene cyclized product (isoprene-based polymer cyclized product) and hydrogenation product of polyisoprene cyclized product (alicyclic polymer). The obtained polyisoprene cyclized product had an Mn=86,500 and Mw/Mn=1.56, had a cyclization rate of 98%, had a glass transition temperature of 124°C, and, further, had a stress optical coefficient (C_{R}) of less than the absolute value of the measurement limit ±100×10⁻¹² Pa⁻¹. Further, the hydrogenation product of polyisoprene cyclized product had an Mn=61,300 and Mw/Mn=1.51, had a hydrogenation rate of 99%, had a glass transition temperature (Tg) of 150°C, and had a stress optical coefficient (C_{R}) of 186×10⁻¹² Pa⁻¹_{.}
Further, the obtained polyisoprene cyclized product and its hydrogenation product were used to prepare cast films. The obtained cast films were pliable and did not crack even when bent.

| | Example | | | |
|---|---|---|---|---|
| | 6 | 7 | 8 | 9 |
| Polyisoprene | | | | |
| Number average molecular weight (Mn) | 253,300 | 243,100 | 132,500 | 136,800 |
| Molecular weight distribution (Mw/Mn) | 1.84 | 2.07 | 3.82 | 2.17 |
| Ratio of 3,4-bond units (mol%) | 78 | 89 | 83 | 97 |
| Glass transition temperature (Tg) (°C) | 18 | 28 | 23 | 31 |
| Polyisoprene cyclized product | | | | |
| Number average molecular weight (Mn) | 135,400 | 134,800 | 92,600 | 86,500 |
| Molecular weight distribution (Mw/Mn) | 1.90 | 1.56 | 1.72 | 1.56 |
| Cyclization rate (%) | 96 | 97 | 95 | 98 |
| Glass transition temperature (Tg) (°C) | 102 | 121 | 120 | 124 |
| Stress optical coefficient (Pa⁻¹) | ≤\|± 100x10⁻¹²\| | ≤\|±100x10⁻¹²\| | ≤\| ±100x10⁻¹²\| | ≤\|± 100x10⁻¹²\| |
| Mechanical strength ** | Good | Good | Good | Good |
| Hydroganation product of polyisoprene cyclized product | | | | |
| Number average molecular weight (Mn) | 110,900 | 95,500 | 91,700 | 61,300 |
| Molecular weight distribution (Mw/Mn) | 1.80 | 1.51 | 1.51 | 1.51 |
| Hydrogenation rate (%) | 98 | ≥99 | 98 | 99 |
| Glass transition temperature (Tg) (°C) | 117 | 141 | 138 | 150 |
| Stress optical coefficient (Pₐ⁻¹) | 541x10⁻¹² | 210x10⁻¹² | 378x10⁻¹² | 186x10⁻¹² |
| Mechanical strength ** | Good | Good | Good | Good |

| | | | | |
|---|---|---|---|---|
| ** One with pliable and no cracks was indicated as "good", while one with cracks was indicated as "Poor". | | | | |

From Table 1, the cyclized products obtained by a cyclization reaction of a polyissoprene having structural units expressed by the above general formula (1) (3,4-bond units) and having a ratio of content of those structural units to all structural units of 60 mol% or more had high glass transition temperatures and were superior in mechanical strength (Examples 1 to 5).

On the other hand, the cyclized products obtained by a cyclization reaction of a polyisoprene not having much of the structural units expressed by the above general formula (1) at all and unable to be measured for isotacticity of the structural units, when the cyclization rate was 76 mol%, had a good mechanical strength, but had a low glass transition temperature (Comparative Example 1), while, when the cyclization rate was raised to 89 mol% to make the glass transition temperature higher, were inferior in mechanical strength (Comparative Example 2).

Further, from the results of Examples 6 to 9 of Table 2, cyclized products obtained by a cyclization reaction of an isoprene-based polymer having a ratio of content of 3,4-bond units to all repeating structural units of 60 mol% or more and their hydrogenation products had high mechanical strengths, had higher glass transition temperatures, and further had low stress optical coefficients and were superior in low birefringence.

## Claims

1. An isoprene-based polymer cyclized product obtained by cyclization of an isoprene-based polymer containing structural units expressed by the general formula (1) and having a ratio of content of the structural units to all repeating structural units of 60 mol% or more. 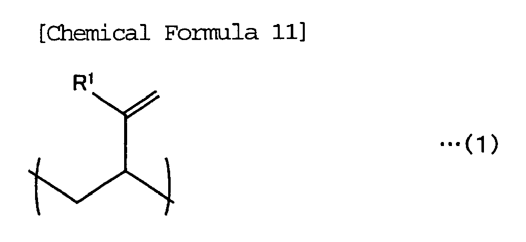 (in the general formula (1), R¹ indicates a C1 to C10 alkyl group)

2. The isoprene-based polymer cyclized product as set forth in claim 1, wherein in the general formula (1), R¹ is a methyl group.

3. The isoprene-based polymer cyclized product as set forth in claim 1 or 2, wherein the structural units expressed by the general formula (1) have an isotacticity expressed by triads of 60%mm or more.

4. The isoprene-based polymer cyclized product as set forth in any one of claims 1 to 3, wherein the structural units expressed by the general formula (1) have an isotacticity expressed by pentads of 99%mmmm or more.

5. The isoprene-based polymer cyclized product as set forth in any one of claims 1 to 4, wherein a ratio of content of the structural units expressed by the general formula (1) in the isoprene-based polymer with respect to all repeating structural units is 95 mol% or more.

6. The isoprene-based polymer cyclized product as set forth in any one of claims 1 to 5, wherein the isoprene-based polymer has a number average molecular weight of 5,000 to 6,000,000.

7. The isoprene-based polymer cyclized product as set forth in any one of claims 1 to 6, wherein the isoprene-based polymer cyclized product has a number average molecular weight of 10,000 to 1,000,000.

8. The isoprene-based polymer cyclized product as set forth in any one of claims 1 to 7, wherein the isoprene-based polymer cyclized product has a cyclization rate of 60% or more.

9. The isoprene-based polymer cyclized product as set forth in any one of claims 1 to 8, wherein the isoprene-based polymer cyclized product has a glass transition temperature of 100°C or more.

10. A method of production of an isoprene-based polymer cyclized product as set forth in any one of claims 1 to 9, comprising
a step of causing a cyclization reaction of the isoprene-based polymer containing structural units expressed by the general formula (1) and having a ratio of content of the structural units to all repeating structural units of 60 mol% or more in the presence of an acidic compound.

11. An optical resin comprising the isoprene-based polymer cyclized product as set forth in any one of claims 1 to 9.

12. An alicyclic polymer obtained by hydrogenation of 50% or more of the carbon-carbon double bonds of the isoprene-based polymer cyclized product as set forth in any one of claims 1 to 9.

13. The alicyclic polymer as set forth in claim 12, wherein the alicyclic polymer has a number average molecular weight of 10,000 to 1,000,000.

14. An optical resin comprising the alicyclic polymer as set forth in claim 12 or 13.
